Europäisches Patentamt

(19) **European Patent Office**

**Office européen des brevets**

(11) Numéro de publication: **0 004 500**
**B1**

(12) **FASCICULE DE BREVET EUROPEEN**

(45) Date de publication du fascicule du brevet: **28.07.82**

(51) Int. Cl.³: **B 65 D 41/34**

(21) Numéro de dépôt: **79400164.4**

(22) Date de dépôt: **13.03.79**

(54) Bouchon inviolable en matière plastique et moule pour sa fabrication.

(30) Priorité: **28.03.78 FR 7808912**

(43) Date de publication de la demande:
**03.10.79 Bulletin 79/20**

(45) Mention de la délivrance du brevet:
**28.07.82 Bulletin 82/30**

(84) Etats contractants désignés:
**BE CH DE FR GB IT LU NL SE**

(56) Documents cités:
**FR - A - 1 536 459**
**FR - A - 2 176 620**
**FR - A - 2 261 937**
**FR - A - 2 352 719**
**US - A - 3 329 295**
**US - A - 3 455 478**

(73) Titulaire: **CAPTOCAP LIMITED**
**Boîte Postale 34709**
**Vaduz (LI)**

(72) Inventeur: **Hilaire, Fernand**
**Le Victoria 13 Boulevard Princesse Charlotte**
**Monte Carlo (MC)**

(74) Mandataire: **Bouju, André et al,**
**Cabinet Bouju 38 avenue de la Grande Armée**
**F-75017 Paris (FR)**

Courier Press, Leamington Spa, England.

# Bouchon inviolable en matière plastique et moule pour sa fabrication.

La présente invention concerne un bouchon inviolable en matière plastique pour fermer de façon étanche des récipients divers tels que des flacons destinés à contenir des produits pharmaceutiques. L'invention vise également un moule pour la fabrication de tels bouchons.

L'invention concerne plus particulièrement un bouchon comprenant une cape filetée destinée à être vissée sur le col du récipient, une bague destinée à prendre appui sous une saillie annulaire ménagée sur le col du récipient et une collerette reliée à la cape, ladite bague étant reliée à la cape par des ponts de matière plastique déchirables au dévissage du bouchon, cette bague et ces ponts étant situés sensiblement dans le prolongement de la paroi latérale de la cape et l'extrémité libre de la bague comprenant une nervure annulaire destinée à prendre appui sur cette saillie annulaire du col du récipient.

On connaît selon le FR—A—2 176 620 un bouchon comportant une cape filetée destinée à être vissée sur le col d'un flacon et d'une bague destinée à prendre appui sous une saillie annulaire ménagée sur le col de ce récipient. Un élément de verrouillage est fixé à l'intérieur de la cape et protégé par une jupe formant la partie inférieure de cette cape. Un logement ou espace circulaire prévu entre l'élément de verrouillage et la partie inférieure de la jupe est suffisamment petit pour que la jupe limite la flexion possible de l'élément de verrouillage, lorsque la cape est vissée pour éviter que l'élément de verrouillage ne fléchisse trop et glisse simplement en sens inverse sur la bride du récipient.

La bague de ce bouchon est reliée à la cape par des ponts de matière plastique déchirables au dévissage du bouchon. Ces ponts sont situés au même niveau que la surface d'appui de la bague et s'étendent sensiblement radialement à l'extérieur de cette bague. Dans ces conditions, les ponts doivent supporter intégralement les efforts engendrés lors de la mise en place du bouchon sur le flacon. Ces ponts doivent de ce fait être suffisamment résistants, d'où il résulte l'inconvénient qu'ils sont difficilement déchirables lors du dévissage du bouchon.

On connaît également selon US—A—3 329 295 un bouchon comprenant une cape filetée destinée à être vissée sur le col du récipient et une bague destinée à prendre appui sous une saillie annulaire ménagée sur le col du récipient, cette bague étant reliée à la cape par des ponts de matière plastique déchirables au dévissage du bouchon. Cette bague et ces ponts sont sensiblement dans le prolongement de la paroi latérale de la cape et l'extrémité libre de la bague comprend une nervure annulaire destinée à prendre appui sous ladite saillie annulaire du col du récipient.

Les bouchons connus présentent l'inconvénient que la bague de garantie après dévissage de la cape reste en place sur le col du récipient, d'où cette bague peut difficilement être enlevée. Ceci présente un inconvénient notamment dans le cas où le récipient doit être réutilisé et retourné au fabricant.

Le but de la présente invention est de remédier à cet inconvénient en créant un bouchon inviolable comportant une bande déchirable de garantie qui peut être facilement enlevée du col du récipient.

Suivant l'invention, ce bouchon est caractérisé en ce que la bague comporte suivant sa hauteur au niveau de la nervure un amincissement déchirable et en ce qu'au moins un pont de section plus forte que les autres ponts est disposé sensiblement à l'opposé dudit amincissement, de sorte que la bague reste fixée au bouchon par ledit pont de plus forte section après dévissage de celui-ci.

Ainsi, après rupture des ponts de plus faible section et dévissage de la cape, la bague accrochée à cette dernière est enlevée du récipient en même temps que cette cape.

Suivant une autre version de l'invention, le bouchon est caractérisé en ce que la nervure annulaire de la bague s'étend sur moins de la moitié de la circonférence de la bague et en ce qu'au moins un pont de section plus forte que les autres ponts est disposé sensiblement à l'opposé de cette nervure, de sorte que la bague reste fixée au bouchon par ledit pont de section plus forte après dévissage de celui-ci.

Selon cette version, la bague de garantie est également enlevée du col du récipient après dévissage de la cape.

L'invention vise également un moule pour la fabrication du bouchon conforme à l'invention.

Ce moule comprend une matrice comportant une cavité interne correspondant à la surface extérieure de la cape du bouchon à mouler, une plaque d'éjection comportant un alésage correspondant à la surface extérieure de la bague du bouchon, une douille d'éjection montée coulissante dans ledit alésage et à l'intérieur de laquelle peut coulisser un noyau dont la partie supérieure comporte l'empreinte intérieure du bouchon à mouler, ce noyau étant traversé axialement par une soupape dont la tête est destinée à prendre appui sur le fond du bouchon à mouler.

Ce moule est caractérisé en ce que le noyau comporte, à l'arrière des gorges correspondant au filetage de la cape, et en avant de la contre-dépouille annulaire correspondant aux ponts, une nervure annulaire en saillie permettant d'écarter la cape du bouchon de la surface du noyau, sous l'effet de la poussée exercée sur l'extrémité de la bague par la douille d'éjection.

Cette disposition permet d'éviter la rupture des ponts lors du démoulage du bouchon.

D'autres particularités et avantages de l'invention apparaîtront encore dans la description qui va suivre.

Aux dessins annexés, donnés à titre d'exemples non limitatifs:

· la figure 1 est une vue en élévation avec arrachement d'un bouchon conforme à l'invention, monté sur un flacon;

· la figure 2 est vue en coupe suivant le plan II—II de la figure 1;

· la figure 3 est une vue en coupe longitudinale, à très grande échelle, de la partie A de la figure 2;

· la figure 4 est une vue en coupe longitudinale partielle d'une variante de réalisation du bouchon conforme à l'invention;

· la figure 5 est une vue en coupe suivant le plan V—V de la figure 4;

· la figure 6 est une vue de face du bouchon selon les figures 4 et 5, après arrachement de la bague;

· la figure 7 est une vue analogue à la figure 4, concernant une autre variante;

· la figure 8 est une vue en coupe suivant le plan VIII—VIII de la figure 7;

· les figures 9 à 12 sont des vues schématiques en demi-coupe longitudinale, d'un moule conforme à l'invention, correspondant aux divers stades de fonctionnement de ce moule.

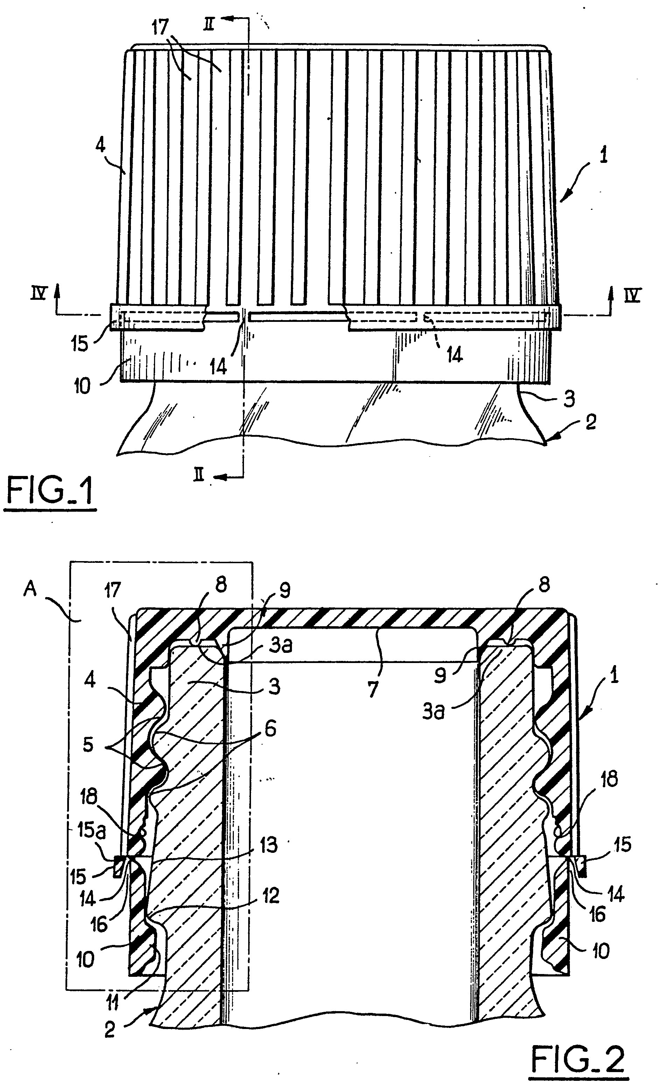

Dans la réalisation des figures 1 et 2, le bouchon inviolable 1 conforme à l'invention, en une matière plastique relativement rigide telle que le polypropylène, est supposé monté sur le col 3 d'un flacon 2 renfermant, par exemple, un produit pharmaceutique.

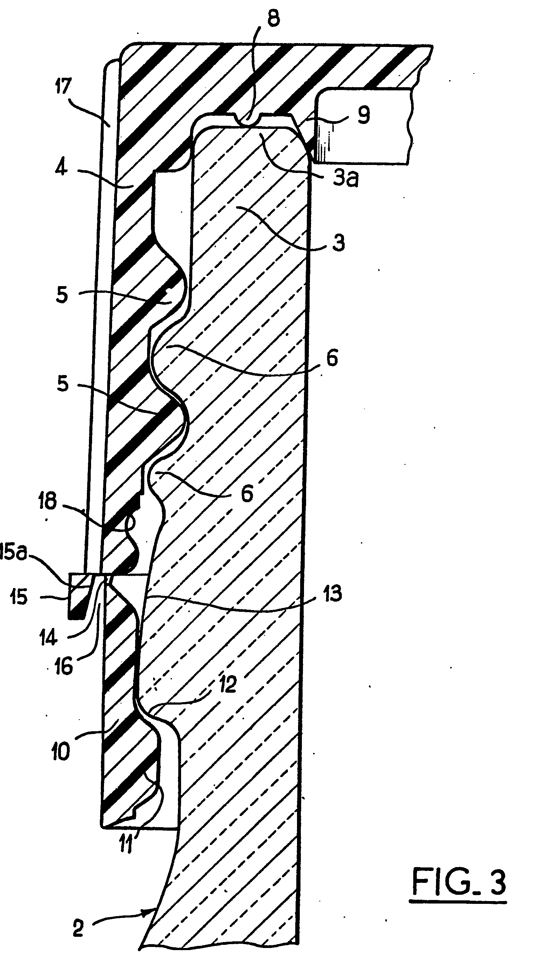

Ce bouchon 1 comprend une cape 4 dont la face latérale interne filetée 5 (voir figures 2 et 3) est vissée sur les filets 6 ménagés sur le col 3 du flacon 2. Le fond 7 de la cape 4 est appliqué, de façon hermétique, contre le col 3, au moyen d'une nervure circulaire 8 prenant appui sensiblement au milieu du bord supérieur 3a du col 3 et d'une languette 9 relativement souple, prenant appui latéralement contre le bord 3a de ce col.

La cape 4 est prolongée vers le bas par une bague 10 comportant à son extrémité libre une nervure annulaire interne 11 prenant appui sous une saillie annulaire 12, ménagée sous les filets 6 du col 3 du flacon. Entre les filets 6 et cette saillie 12, le col 3 comprend une surface tronconique 13 dont le diamètre croît vers le bas.

La cape 4 est reliée à la bague 10 par une série de ponts 14 répartis de façon régulière autour du bouchon. Ces ponts 14 sont moulés en même temps que l'ensemble du bouchon 1 et sont plus minces que la paroi latérale de ce dernier, de façon à permettre leur déchirement au dévissage du bouchon 1. De plus, ces ponts 14 sont entourés extérieurement par une collerette 15 reliée à la cape 4. Cette collerette 15 masque les ponts 14.

Comme on le voit sur les figures 2 et 3, la collerette 15 définit entre elle et les ponts 14 un espace annulaire 16 de largeur suffisante, pour permettre à la bague 10 de se dilater vers l'extérieur lors de son engagement sur la saillie annulaire 12 du col 3, au moment du vissage du bouchon 1.

Par ailleurs, la face interne 15a de la collerette 15 constitue une butée pour limiter la dilatation de la bague 10 vers l'extérieur, de façon à éviter la rupture des ponts 14.

De plus, on voit sur la figure 1, que la cape 4 comporte, sur sa face latérale extérieure, des stries longitudinales 17 constituant une surface de friction pour la préhension du bouchon 1 avec les doigts. La collerette 15 fait saillie relativement à cette surface de friction, de manière à éviter que les doigts prennent appui sur le bouchon 1, sous la cape 4, ce qui rendrait le dévissage impossible.

On voit, d'autre part, sur les figures 2 et 3, que la face interne de la cape 4 comporte une gorge annulaire 18 ménagée entre la partie filetée 5 et les ponts déchirables 14. Le rôle de cette gorge 18 sera expliqué plus loin, dans la description du moule conforme à l'invention.

La mise en place du bouchon conforme à l'invention sur le col 3 du flacon 2 est réalisée comme suit (voir figures 2 et 3):

On engage le bouchon 1 sur le col 3. A ce moment, le premier filet 5 de la cape 4 est en contact avec le filet 6 correspondant du col 3, et la nervure interne 11 de la bague 10 touche la surface tronconique 13 du col 3. Il suffit alors de visser la cape 4, en appliquant une légère pression vers le col 3, pour permettre à la bague 10 de glisser sur la surface tronconique 13 jusqu'à la saillie 12 du col 3. Ce mouvement entraîne une légère dilatation de la bague 10 vers l'extérieur. Cette dilatation est réalisée par une légère déformation élastique de la partie la plus mince de la matière plastique, c'est-à-dire au niveau des ponts 14. Cette dilatation est limitée vers l'extérieur par la face interne 15a de la collerette 15 qui évite ainsi la rupture accidentelle des ponts 14.

A fond de vissage, la nervure 11 de la bague 10 prend appui élastique sous la saillie annulaire 12 du col 3, la nervure 8 et la languette annulaire 9 prennent appui sur le bord supérieur 3a de ce col 3, en assurant ainsi l'étanchéité requise.

Dans le cas où le récipient 2 est destiné à être réutilisé et retourné au fabricant, il est avantageux de pouvoir enlever facilement la bague 10 du col 3 du récipient 2.

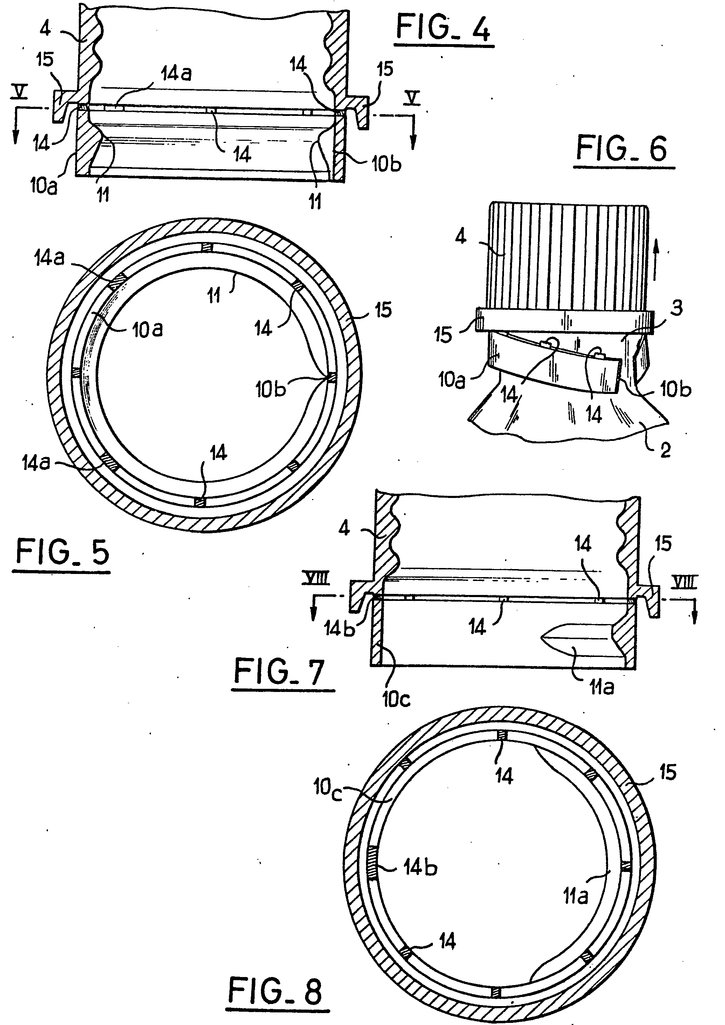

Dans la réalisation des figures 4 et 5, la bague 10a comporte, à cet effet, suivant sa hauteur, un amincissement 10b déchirable. De plus, deux ponts 14a de section plus importante que les autres ponts 14, sont disposés sensiblement à l'opposé de l'amincissement 10b.

Lors du dévissage du bouchon (voir figure 6), les ponts 14 de faible section se déchirent ainsi que l'amincissement 10b. Le bouchon peut ensuite être dévissé complètement. La bague 10, déchirée au niveau de son amincissement 10b, reste fixée au bouchon grâce aux deux ponts 14a.

Dans la réalisation des figures 7 et 8, la bague 10c comprend une nervure 11a qui s'étend sur moins de la moitié, de préférence, sur 120 à 160° de la circonférence de cette bague. De plus, un pont 14b de section plus importante que les autres ponts 14, est disposé à l'opposé de la nervure 11a.

Lors du dévissage du bouchon, les ponts 14 de faible section se déchirent, comme précédemment. Après dévissage complet du bouchon, la bague 10c peut être libérée simplement en inclinant légèrement le bouchon, de façon à dégager la nervure 11a de la saillie annulaire 12 du récipient 2. La bague 10c reste fixée au bouchon, grâce au pont 14b de forte section.

La fabrication du bouchon conforme à l'invention est réalisée au moyen d'un moule constituant une adaptation du moule décrit dans le FR—A—2 261 937 au nom de la Demanderesse.

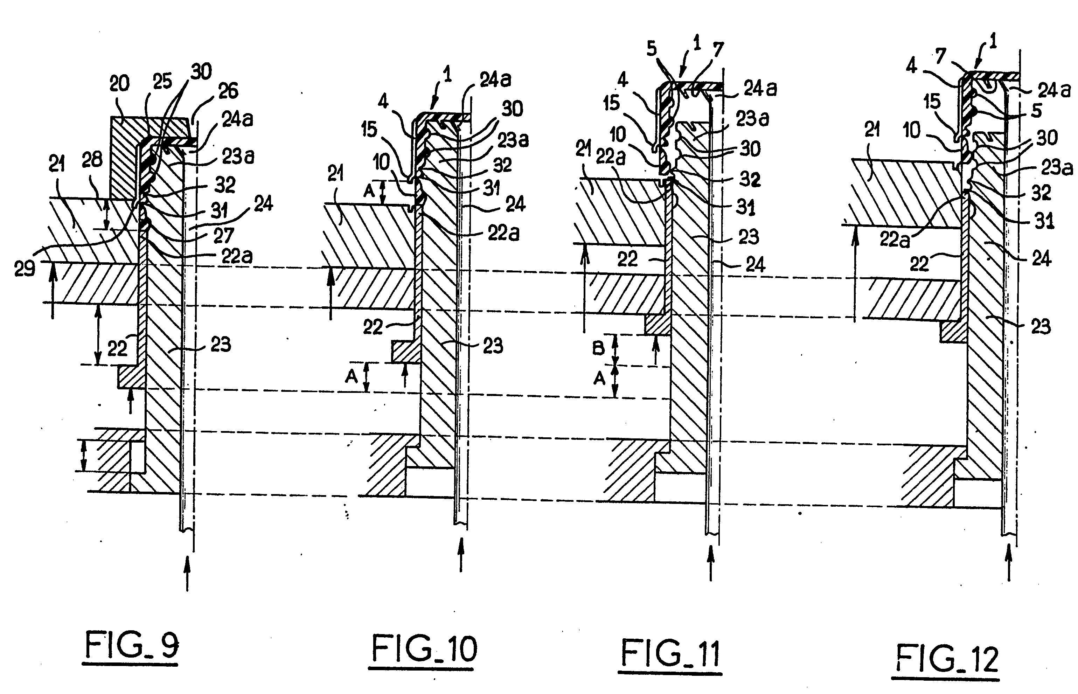

Ce moule comprend (voir figures 9 à 12) une matrice 20, une plaque d'éjection 21, une douille d'éjection 22, un noyau 23, une soupape 24, et des moyens non représentés pour commander le déplacement relatif de ces différents organes.

La matrice 20 comporte une cavité interne 25 correspondant à la surface extérieure de la cape 4 du bouchon à mouler. Cette matrice 20 comprend également un orifice central 26 pour l'injection de la matière plastique.

La plaque d'éjection 21 comprend un alésage central 27 correspondant à la surface extérieure de la bague 10 du bouchon à mouler. Cette plaque d'ejection 21 comporte, d'autre part, sur sa face 28 adjacente à la matrice 20, une gorge annulaire 29 correspondant au profil de la collerette 15 du bouchon à mouler.

Dans l'alésage 27 de la plaque d'éjection 21 est montée coulissante la douille d'éjection 22 dont l'extrémité supérieure 22a correspond à l'extrémité libre de la bague 10 du bouchon. Cette douille 22 est, elle-même, traversée axialement par le noyau 23 dont la partie supérieure 23a comporte l'empreinte intérieure du bouchon à mouler. Ce noyau 23 est également traversé axialement par la soupape 24 dont la tête 24a est destinée à prendre appui sur le fond 7 du bouchon à mouler.

Conformément à une version préférée de l'invention, le noyau 23 comporte, à l'arrière des gorges 30 correspondant aux filets 5 de la cape 4 du bouchon à mouler, et en avant de la contre-dépouille annulaire 31 correspondant aux ponts 14, une nervure annulaire 32 en saillie. Le rôle de cette nervure en saillie 32 sera détaillé ci-après.

La fabrication des bouchons conformes à l'invention au moyen du moule représenté sur les figures 9 à 12 est réalisée comme suit:

L'injection de la matière plastique est effectuée par l'orifice 26 de la matrice 20, le moule étant en position de moulage, comme indiqué sur la figure 9.

Après durcissement de la matière plastique, on écarte la matrice 20 et on commence le démoulage du bouchon 1. Ce démoulage est réalisé en trois étapes successives:

Dans une première étape (voir figure 10), la douille d'éjection 22, le noyau 23 et la soupape 24 sont poussés vers le haut, suivant une course A correspondant à la hauteur de la bague 10 du bouchon. Cette bague 10 est ainsi dégagée de la plaque d'éjection 21.

Dans une seconde étape (voir figure 11), le noyau 23 reste immobile et la douille 22, la soupape 24 ainsi que la plaque d'éjection 21 sont poussés vers le haut suivant une course B. Le bouchon 1 est écarté du noyau 23. Entre la première étape et la deuxième étape précitées, la nervure annulaire 32 du noyau 23 écarte la cape 4 de l'empreinte 23a de ce noyau, en dégageant ainsi, vers l'extérieur, les ponts 14 de la contredépouille 31 correspondante du noyau 23. On évite ainsi toute déformation excessive de la bague 10 au niveau des ponts 14 qui risquerait de casser ceux-ci.

Dans la dernière étape (voir figure 12), la douille d'éjection 22 reste immobile et la plaque d'éjection 21, ainsi que la soupape 24, continuent leur progression vers le haut, en dégageant ainsi complètement le bouchon 1.

Bien entendu, les trois étapes précitées sont réalisées en continu et en très peu de temps.

Le moule conforme à l'invention dont on vient de décrire le fonctionnement est parfaitement adapté au moulage d'une matière plastique relativement rigide, telle que le polypropylène, en évitant tout risque de cassure des ponts 14 du bouchon.

Bien entendu, l'invention n'est pas limitée aux exemples que l'on vient de décrire, et on peut apporter à ceux-ci de nombreuses modifications sans sortir du cadre de l'invention.

Ainsi, le bouchon inviolable conforme à l'invention peut également être réalisé en une matière plastique moins rigide que le polypropylène, à condition d'adapter les dimensions des ponts 14 aux propriétés mécaniques de cette matière plastique.

Les moyens d'étanchéité de bouchon 1 peuvent être autres que la nervure 8 et la languette annulaire 9 ménagées sur le fond 7 du bouchon.

En outre, la collerette 15 pourrait être prolongée vers le bas du bouchon pour recouvrir entièrement la bague 10.

**Revendications**

1. Bouchon inviolable en matière plastique pour fermer de façon étanche des récipients divers, ce bouchon (1) comprenant une cape filetée (4) destinée à être vissée sur le col (3) du récipient (2), une bague (10a) destinée à prendre appui sous une saillie annulaire (12) ménagée sur le col du récipient et une collerette (15) reliée à la cape (4), ladite bague (10a) étant reliée à la cape (4) par des ponts (14) de matière plastique déchirables au dévissage du

bouchon, cette bague (10a) et ces ponts (14) étant situés sensiblement dans le prolongement de la paroi latérale de la cape (4) et l'extrémité libre de la bague (10a) comprenant une nervure annulaire (11) destinée à prendre appui sur cette saillie annulaire (12) du col (3) du récipient, caractérisé en ce que la bague (10a) comporte suivant sa hauteur au niveau de la nervure (11) un amincissement déchirable (10b) et en ce qu'au moins un pont (14a) de section plus forte que les autres ponts (14) est disposé sensiblement à l'opposé dudit amincissement (10b), de sorte que la bague (10a) reste fixée au bouchon (1) par ledit pont de plus forte section après dévissage de celui-ci.

2. Bouchon inviolable en matière plastique pour fermer de façon étanche des récipients divers, ce bouchon (1) comprenant une cape filetée (4) destinée à être vissée sur le col (3) du récipient (2), une bague (10c) destinée à prendre appui sous une saillie annulaire (12) ménagée sur le col du récipient et une collerette (15) reliée à la cape (4), ladite bague (10c) étant reliée à la cape (4) par des ponts (14) de matière plastique déchirables au dévissage du bouchon, cette bague (10c) et ces ponts (14) étant situés sensiblement dans le prolongement de la paroi latérale de la cape (4) et l'extrémité libre de la bague (10c) comprenant une nervure annulaire (11a) destinée à prendre appui sur cette saillie annulaire (12) du col (1) du récipient, caractérisé en ce que la nervure annulaire (11a) de la bague (10c) s'étend sur moins de la moitié de la circonférence de la bague et en ce qu'au moins un pont (14b) de section plus forte que les autres ponts (14) est disposé sensiblement à l'opposé de cette nervure, de sorte que la bague (10) reste fixée au bouchon (1) par ledit pont de section plus forte, après dévissage de celui-ci.

3. Bouchon conforme à l'une des revendications 1 ou 2, caractérisé en ce que la collerette (15) reliée à la cape (4) entoure les ponts (14) et définit entre elle et les ponts un espace annulaire de largeur suffisante pour permettre à la bague de se dilater vers l'extérieur lors de son engagement sur la saillie annulaire du col (3) du récipient (2) au moment du vissage du bouchon (1).

4. Bouchon conforme à la revendication 3, caractérisé en ce que le collerette (15) constitue une butée pour limiter la dilatation de la bague (10).

5. Bouchon conforme à l'une des revendications 1 à 4, la cape (4) comportant sur sa face extérieure des stries (17) ou saillies constituant une surface de friction pour la préhension du bouchon (1) avec les doigts, caractérisé en ce que la collerette (15) de la cape (4) fait saillie relativement à la surface de friction précitée.

6. Bouchon conforme à l'une des revendications 1 à 5, caractérisé en ce que le fond de la cape (4) comporte une languette circulaire (9) adaptée à prendre appui latéralement et hermétiquement contre le col (3) du récipient (2).

7. Moule pour la fabrication du bouchon conforme à l'une quelconque des revendications 1 à 6, comprenant une matrice (20) comportant une cavité interne (25) correspondant à la surface extérieure de la cape (4) du bouchon à mouler, une plaque d'ejection (21) comportant un alésage (27) correspondant à la surface extérieure de la bague (10) du bouchon, une douille d'éjection (22) montée coulissante dans ledit alésage (27) et à l'intérieur de laquelle peut coulisser un noyau (23) dont la partie supérieure comporte l'empreinte intérieure du bouchon à mouler, ce noyau (23) étant traversé axialement par une soupape (24) dont la tête (24a) est destinée à prendre appui sur le fond (7) du bouchon à mouler, caractérisé en ce que, le noyau (23) comporte, à l'arrière des gorges (30) correspondant aux filets (5) de la cape (4) du bouchon à mouler, et en avant de la contre-dépouille annulaire (31) correspondant aux ponts (14), une nervure annulaire (32) en saillie, permettant d'écarter la cape du bouchon de la surface du noyau, sous l'effet de la poussée exercée sur l'extrémité de la bague par la douille d'ejection.

8. Moule conforme à la revendication 7, caractérisé en ce que la plaque d'éjection (21) comporte, sur sa face (28) adjacente à la matrice (20), une gorge annulaire (29) pour le moulage de la collerette (15) du bouchon.

**Patentansprüche**

1. Unverletzbarer Verschluß aus Plastikmaterial zum dichten Verschließen verschiedener Behälter, mit einer mit Gewinde versehenen Kappe (4), die dazu bestimmt ist, auf den Hals (3) Behälters (2) aufgeschraubt zu werden, einem Ring (10a), der dazu bestimmt ist, sich unter einem ringförmigen Vorsprung (12) abzustützen, der am Behälterhals angebracht ist, und einem mit der Kappe (4) verbundenen Kranz (15), wobei der Ring (10a) mit der Kappe (4) durch Brücken (14) aus Kunststoffmaterial verbunden ist, die beim Abschrauben des Verschlusses zerreißbar sind, und wobei der Ring (10a) und die Brücken (14) sich im wesentlichen in der Verlängerung der Seitenwandung der Kappe (4) befinden und das freie Ende des Ringes (10a) eine ringförmige Rippe (11) aufweist, die dazu bestimmt ist, sich auf dem ringförmigen Vorsprung (12) des Halses (3) des Behälters abzustützen, dadurch gekennzeichnet, daß der Ring (10a) entlang seiner Höhenausdehnung auf der Höhe der Rippe (11) eine zerreißbare Verdünnung (10b) aufweist und daß wenigstens eine Brücke (14a) mit größerem Querschnitt' als die anderen Brücken (14) im wesentlichen gegenüber dieser Verdünnung (10b) angeordnet ist, so daß der Ring (10a) mittels der Brücke mit größerem Querschnitt nach dem Abschrauben am Verschluß (1) befestigt bleibt.

2. Unverletzbarer Verschluß aus Plastikmaterial zum dichten Verschließen verschiedener Behälter, mit einer mit Gewinde versehenen Kappe (4), die dazu bestimmt ist, auf den Hals (3) des Behälters (2) aufgeschraubt zu werden, einem Ring (10c), der dazu bestimmt ist, sich unter einem ringförmigen Vorsprung (12) abzustützen, der am Behälterhals angebracht ist, und einem mit der Kappe (4) verbundenen Kranz (15), wobei der Ring (10c) mit der Kappe (4) durch Brücken (14) aus Kunststoffmaterial verbunden ist, die beim Abschrauben des Verschlusses zerreißbar sind, und wobei der Ring (10c) und die Brücken (14) sich im wesentlichen in der Verlängerung der Seitenwandung der Kappe (4) befinden und das freie Ende des Ringes (10c) eine ringförmige Rippe (11a) aufweist, die dazu bestimmt ist, sich auf dem ringförmigen Vorsprung (12) des Halses (3) Behälters abzustützen, dadurch gekennzeichnet, daß die ringförmige Rippe (11a) des Ringes (10c) sich wenigstens über die Hälfte des Umfanges des Ringes erstreckt und daß wenigstens eine Brücke (14b) mit größerem Querschnitt als die anderen Brücken (14) im wesentlichen gegenüber dieser Rippe angeordnet ist, so daß der Ring (10c) mittels der Brücke mit größerem Querschnitt nach dem Abschrauben am Verschluß (1) befestigt bleibt.

3. Verschluß nach einem der Ansprüche 1 oder 2, dadurch gekennzeichnet, daß der mit der Kappe (4) verbundene Kranz (15) die Brücken (14) umgibt und zwischen sich und den Brücken (14) einen ringförmigen Raum festlegt, dessen Breite ausreicht, damit der Ring sich bei seinem Aufgreifen auf dem ringförmigen Vorsprung des Halses (3) des Behälters (2) im Zeitpunkt des Aufschraubens des Verschlusses (1) nach außen aufweiten kann.

4. Verschluß nach Anspruch 3, dadurch gekennzeichnet, daß der Kranz (15) einen Anschlag bildet, um die Aufweitung des Ringes (10) zu begrenzen.

5. Verschluß nach einem der Ansprüche 1 bis 4, wobei die Kappe (4) auf ihrer Außenoberfläche Rillen (17) oder analoge Vorsprünge aufweist, die eine Reibungsoberfläche zum Erfassen des Verschlusses (1) mit den Fingern bilden, dadurch gekennzeichnet, daß der Kranz (15) der Kappe (4) in bezug auf diese Reibungsoberfläche vorsteht.

6. Verschluß nach einem der Ansprüche 1 bis 5, dadurch gekennzeichnet, daß der Boden der Kappe (4) eine längs eines Kreises verlaufende Zunge (9) aufweist, die sich in seitlicher Richtung hermetisch abdichtend gegen den Hals (3) des Behälters (2) anlegen kann.

7. Form zur Herstellung des Verschlusses nach einem der Ansprüche 1 bis 6, mit einer Matrize (20), die einen Innenhohlraum (25) enthält, der der Außenoberfläche der Kappe (4) des zu formenden Verschlusses entspricht, mit einer Auswurfplatte (21), die eine Bohrung (27) enthält, welche der Außenoberfläche des Ringes (10) des Verschlusses entspricht, einer Auswurfbuchse (22), die gleitend in der Bohrung (27) angeordnet ist und in deren Innerem ein Kern (23) gleiten kann, dessen Oberteil den Innenabdruck des zu formenden Verschlusses enthält, wobei dieser Kern (23) in Axialrichtung von einem Ventil (24) durchquert wird, dessen Kopf (24a) dazu bestimmt ist, sich auf dem Boden (7) des zu formenden Verschlusses abzustützen, dadurch gekennzeichnet, daß der Kern (23) hinter den den Gewindegängen (5) entsprechenden Rillen (30) der Kappe (4) des zu formenden Verschlusses und vor der den Brücken (14) entsprechenden ringförmigen Hinterschneidung (31) eine ringförmige, vorstehende Rippe (32) enthält, die es gestattet, die Kappe des Verschlusses von der Oberfläche des Kerns unter der Wirkung des von der Auswurfbuchse auf das Ende des Ringes ausgeübten Druckes zu entfernen.

8. Form nach Anspruch 7, dadurch gekennzeichnet, daß die Auswurfplatte (21) auf ihrer an die Matrize (20) angrenzenden Oberfläche (28) eine ringförmige Rille (29) zur Formung des Kranzes (15) des Verschlusses enthält.

## Claims

1. Pilfer-proof closure cap of plastic material for sealing containers of various types, this closure cap (1) being constituted by an internally threaded shell (4) which is intended to be screwed on the neck (3) of the container (2), a ring (10a) which is intended to be applied beneath an annular projection (12) formed on the neck of the container and an annular flange (15) joined to the shell (4), the said ring (10a) being joined to the shell (4) by bridges (14) of plastic material designed to tear-off at the time of unscrewing of the cap, this ring (10a) and these bridges (14) being located substantially in the line of extension of the lateral wall of the shell (4) and the free end of the ring (10a) being provided with an annular rib (11) which is intended to be applied against this annular projection (12) of the neck (3) of the container, characterized in that the ring (10a) is provided in the vertical direction at the level of the rib (11) with a tearable portion of reduced thickness (10b) and that at least one bridge (14a) having a larger cross-sectional area than the other bridges (14) is disposed substantially opposite to the said portion of reduced thickness (10b), with the result that the ring (10a) remains attached to the closure cap (1) by means of the said bridge of larger cross-sectional area after unscrewing of this latter.

2. Pilfer-proof closure cap of plastic material for sealing containers of various types, this closure cap (1) being constituted by an internally threaded shell (4) which is intended to be screwed on the neck (3) of the container (2), a ring (10c) being intended to be applied beneath an annular projection (12) formed on the neck of the container and an annular flange (15) which is joined to the shell (4), the said ring (10c) being joined to the shell (4) by means of bridges (14) of plastic material which are tearable at the time of unscrewing of the closure cap, this ring (10c) and these bridges (14) being located substantially in the line of extension of the lateral wall of the shell (4) and the free end of the ring (10c) has an annular rib (11a) which is intended to be applied against this annular projection (12) of the neck (1) of the container, characterized in that the annular rib (11a) of the ring (10c) extends over less than one-half of the circumference of the ring and that at least one bridge (14b) of larger cross-sectional area than the other bridges (14) is disposed substantially opposite to this rib, with the result that the ring (10c) remains attached to the closure cap (1) by means of said bridge of larger cross-sectional area after unscrewing of this latter.

3. Closure cap in accordance with one of claims 1 or 2, characterized in that the annular flange (15) joined to the shell (4) surrounds the bridges (14) and defines between the said shell and the bridges an annular space of sufficient width to permit of outward expansion of the ring at the time of engagement thereof on the annular projection of the neck (3) of the container (2) at the moment of screwing of the closure cap (1).

4. Closure cap in accordance with claim 3, characterized in that the annular flange (15) constitutes a stop for limiting expansion of the ring (10).

5. Closure cap in accordance with any one of claims 1 to 4, the shell (4) being provided on its external face with splines (17) or projections constituting a friction surface for gripping the cap (1) with one's fingers, characterized in that the annular flange (15) of the shell (4) forms a projection relative to the friction surface aforesaid.

6. Closure cap in accordance with any one of claims 1 to 5, characterized in that the bottom of the shell (4) is provided with a circular tongue (9) which is adapted to bear laterally and hermetically against the neck (3) of the container (2).

7. Mould for the fabrication of the closure cap in accordance with any one of claims 1 to 6, comprising a die (20) having an internal cavity (25) corresponding to the external surface of the shell (4) of the closure cap to be moulded, an ejection plate (21) being provided with a bore (27) corresponding to the external surface of the ring (10) of the cap, an ejection sleeve (22) which is slidably mounted within the said bore (27) and within the interior of which is slidably mounted a core (23), the upper portion of which is provided with the internal impression of the cap to be moulded, this core (23) being traversed axially by a push-up plunger (24) whose head (24a) is intended to be applied against the end wall (7) of the cap to be moulded, characterized in that the core (23) is provided behind the grooves (30) corresponding to the screw-threads (5) of the shell (4) of the cap to be moulded and, in front of the annular reverse draw-taper (31) corresponding to the bridges (14), with a projecting annular rib (32) for holding the cap shell away from the surface of the core under the action of the thrust exerted on the end of the ring by the ejection sleeve.

8. Mould in accordance with claim 7, characterized in that the ejection plate (21) is provided on that face (28) which is adjacent to the die (20) with an annular groove (29) for moulding the annular flange (15) of the closure cap.

FIG.1

FIG.2

FIG. 3

0 004 500

FIG. 4

FIG. 6

FIG. 5

FIG. 7

FIG. 8

FIG_9          FIG_10          FIG_11          FIG_12